# EUROPEAN PATENT APPLICATION

(11) **EP 4 571 263 A1**
(43) Date of publication of application: **18.06.2025**
(21) Application number: 24217364.9
(22) Date of filing: 04.12.2024
(51) Int. Cl.: G01D 5/14

(54) **POSITION DETECTION SENSOR**

(30) Priority: 15.12.2023 JP 2023211875
(71) Applicant: SMC Corporation, Tokyo 104-0031 (JP)
(72) Inventor: KUWAHARA, Toshiaki, Ibaraki, 300-2493 (JP)
(74) Representative: Keil & Schaafhausen Patentanwälte PartGmbB

(57) **Abstract**

A position detection sensor (30) detects the position of a piston (14) inside an actuator (10), and includes a sensor element (52) that detects a magnet (20) mounted on the piston (14), a housing (50) that accommodates the sensor element (52), a magnetic body (66, 74) displaced to a position corresponding to the position of the magnet (20), and an accommodating portion (64, 72) that is provided in the housing (50) and accommodates the magnetic body (66, 74) in a visually recognizable manner.

## Description

### BACKGROUND OF THE INVENTION

### FIELD OF THE INVENTION

The present disclosure relates to a position detection sensor.

### DESCRIPTION OF THE RELATED ART

A position detection sensor is attached to an outer surface of an actuator. A magnet is mounted on a piston inside the actuator, and the position detection sensor is provided with a magnetic sensor for detecting the magnet. The position where the position detection sensor is attached is adjusted so as to detect that the piston is positioned at one end of the movable range of the piston, for example.

JP 2007-139172 A discloses an auto switch (position detection sensor) indicating the maximum sensitivity position of a magnetic sensor, and a cylinder having, on the outer surface thereof, a scale corresponding to the maximum sensitivity position of the magnetic sensor.

### SUMMARY OF THE INVENTION

In the technique disclosed in JP 2007-139172 A, the position of the piston inside the cylinder cannot be determined although the maximum sensitivity position of the magnetic sensor can be determined. Therefore, the optimum position for attaching the position detection sensor to the actuator cannot be determined.

The present invention has the object of solving the aforementioned problem.

According to an aspect of the present disclosure, there is provided a position detection sensor attached to an actuator, the position detection sensor comprising: a sensor element that detects a magnet mounted on a piston inside the actuator; a housing that accommodates the sensor element; a magnetic body that is displaced to a position corresponding to a position of the magnet; and an accommodating portion that is provided in the housing and accommodates the magnetic body in a visually recognizable manner.

According to the present invention, it is possible to specify an optimum position for attaching the position detection sensor to the actuator.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic view of an actuator and a position detection sensor according to a first embodiment;
FIG. 2 is a functional block diagram of the position detection sensor;
FIG. 3 is a layout diagram of a magnetic sensor, a light emitting element, and a light exit window; and
FIG. 4 is a schematic view of the actuator and the position detection sensor according to a second embodiment.

### DETAILED DESCRIPTION OF THE INVENTION

A piston inside an actuator moves between a first end portion and a second end portion of a movable range of the piston. There is a case where it is desired to detect that the piston inside the actuator has moved to the first end portion by using a position detection sensor. In this case, the attachment position of the position detection sensor may be adjusted so that the output of a magnetic sensor is maximized in a state where the piston is positioned at the first end portion. In order to obtain an output from the magnetic sensor, it is necessary to supply electric power to the magnetic sensor, and therefore, such a position adjustment method is based on the premise that electric power is supplied to the magnetic sensor.

In recent years, a position detection sensor using wireless power transfer has been developed. In such a position detection sensor, the magnetic sensor does not operate in a state where wireless power transfer is not performed. Therefore, in a state where wireless power transfer is not performed, an optimum position for attaching the position detection sensor to the actuator cannot be specified using the magnetic sensor.

According to the embodiment described below, even in a state where wireless power transfer is not performed, it is possible to specify an optimum position for attaching the position detection sensor to the actuator.

### [First Embodiment]

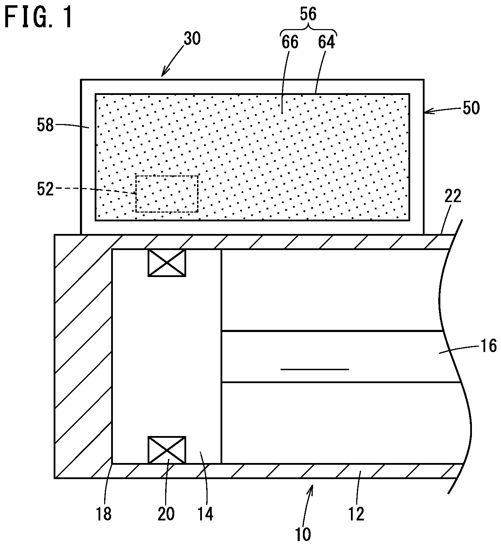

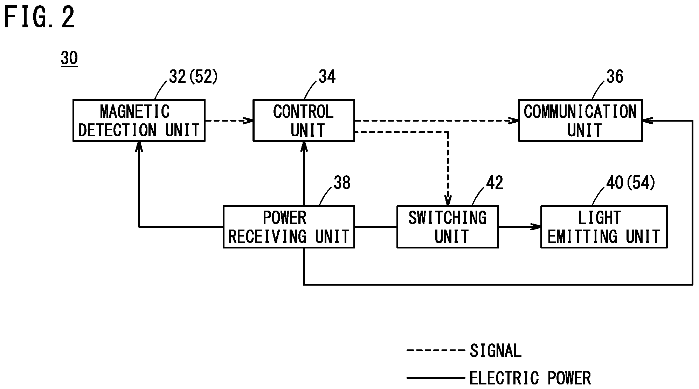

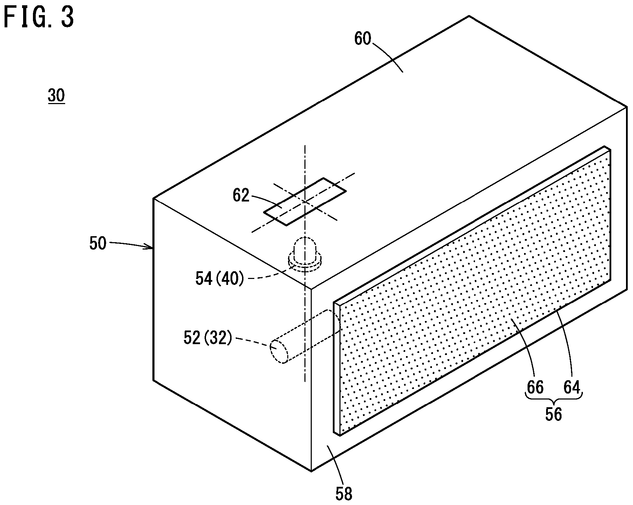

A position detection sensor 30 according to a first embodiment will be described with reference to FIGS. 1 to 3. FIG. 1 is a schematic view of an actuator 10 and the position detection sensor 30 according to the first embodiment. FIG. 1 shows a cross section of the actuator 10 and a side view of the position detection sensor 30. FIG. 2 is a functional block diagram of the position detection sensor 30. FIG. 3 is a layout diagram of a magnetic sensor (a sensor element) 52, a light emitting element 54, and a light exit window 62.

As shown in FIG. 1, the actuator 10 includes a cylinder 12, a piston 14, and a rod 16. The piston 14 is movable between a first end portion 18 and a second end portion (not shown) of a pressure chamber of the cylinder 12. An annular magnet 20 is mounted on an outer periphery of the piston 14. One end portion of the rod 16 is connected to the piston 14. The other end portion of the rod 16 is disposed outside the cylinder 12 and is connected to another machine.

As shown in FIG. 1, the position detection sensor 30 is attached to an outer surface of the actuator 10. In the present specification, the position detection sensor 30 is attached to an upper surface 22 of the actuator 10. It should be noted that the position detection sensor 30 may be attached to an outer surface other than the upper surface 22. The position detection sensor 30 is attachable to and detachable from the upper surface 22 of the actuator 10.

The position detection sensor 30 detects the position of the piston 14 inside the actuator 10. More specifically, the position detection sensor 30 detects the piston 14 positioned at the first end portion 18 in the actuator 10. Further, the position detection sensor 30 transmits a signal indicating that the piston 14 is positioned at the first end portion 18, to an external device such as a programmable logic controller (PLC).

As shown in FIG. 2, the position detection sensor 30 includes a magnetic detection unit 32, a control unit 34, a communication unit 36, a power receiving unit 38, a light emitting unit 40, and a switching unit 42. The magnetic detection unit 32 can be configured by, for example, the magnetic sensor 52 (FIGS. 1 and 3). The magnetic detection unit 32 detects magnetism of the magnet 20 mounted on the piston 14 inside the actuator 10. The magnetic detection unit 32 outputs a signal indicating the magnetism to the control unit 34. The control unit 34 can be configured by, for example, a processor and a memory. The control unit 34 controls the communication unit 36 and the switching unit 42. The communication unit 36 can be configured by, for example, a communication module including a communication circuit for performing short-range wireless communication. The communication unit 36 transmits a signal indicating that the piston 14 (the magnet 20) is positioned at the first end portion 18 of the cylinder 12, to the external device (PLC or the like).

The power receiving unit 38 can be configured by, for example, a circuit for receiving electric power that is supplied wirelessly. Wireless power supply may be performed by any of electromagnetic induction, electric field coupling, and electromagnetic waves (microwaves or laser). The power receiving unit 38 can receive electric power that is supplied wirelessly from a wireless power supply device (not shown). The power receiving unit 38 receives the electric power supplied from the wireless power supply device via an antenna (not shown). The power receiving unit 38 may include a rectifier circuit or the like (not shown). The rectifier circuit or the like rectifies AC power received from the wireless power supply device to generate DC power. The power receiving unit 38 can supply the DC power to respective components of the position detection sensor 30.

The light emitting unit 40 can be configured by, for example, the light emitting element 54 (FIG. 3). For example, in a case where the piston 14 of the actuator 10 is positioned at the first end portion 18, the light emitting unit 40 emits light. On the other hand, in a case where the piston 14 of the actuator 10 is positioned at a portion other than the first end portion, the light emitting unit 40 does not emit light. In response to a signal supplied from the control unit 34, the switching unit 42 switches between an electrically connected state (light emission) and an electrically disconnected state (non-light emission) between the power receiving unit 38 and the light emitting unit 40.

As shown in FIGS. 1 and 3, the position detection sensor 30 includes a housing 50, the magnetic sensor 52, the light emitting element 54, and a magnet detection member 56. The components (for example, the magnetic sensor 52, the light emitting element 54, and the like) of each of the magnetic detection unit 32, the control unit 34, the communication unit 36, the power receiving unit 38, the light emitting unit 40, and the switching unit 42 shown in FIG. 2 are accommodated in the housing 50. In a state where the position detection sensor 30 is attached to the upper surface 22 of the actuator 10, a side surface 58 of the housing 50 is parallel to the moving direction of the piston 14 of the actuator 10.

As shown in FIG. 3, the light exit window 62 is formed in a top plate 60 of the housing 50. Light that is emitted by the light emitting element 54 inside the housing 50 exits to the outside of the housing 50 through the light exit window 62. In a plan view, the light exit window 62, the light emitting element 54, and the magnetic sensor 52 overlap each other. That is, the position of the light exit window 62 in the moving direction of the piston 14, the position of the light emitting element 54 in the moving direction of the piston 14, and the position of the magnetic sensor 52 in the moving direction of the piston 14 are the same. Therefore, the light exit window 62 and the light emitting element 54 serve as a mark indicating the position of the magnetic sensor 52 in the moving direction of the piston 14.

It should be noted that the light exit window 62 and the magnetic sensor 52 may not overlap each other in the plan view. In this case, it is preferable that a mark indicating the position of the magnetic sensor 52 in the moving direction of the piston 14 is provided on the outer surface of the housing 50.

The magnet detection member 56 is in a sheet form. The magnet detection member 56 is attachable to and detachable from the side surface 58 of the housing 50. It should be noted that the magnet detection member 56 may be installed on the side surface 58 of the housing 50. The magnet detection member 56 includes a sealing member 64 (an accommodating portion) and a magnetic fluid 66 (a magnetic body).

The sealing member 64 is attached to the side surface 58 of the housing 50. The sealing member 64 includes two sheet members. The outer edges of the two sheet members are bonded to each other. The sealing member 64 accommodates the magnetic fluid 66 between the two sheet members. Among the two sheet members, the sheet member that is not in contact with the housing 50 needs to be transparent (or translucent). Since the transparent sheet member is used, the magnetic fluid 66 inside the sealing member 64 can be visually recognized from the outside of the position detection sensor 30.

The magnetic fluid 66 is, for example, iron sand. The magnetic fluid 66 is a magnetic body, and therefore is attracted to the magnet 20 mounted on the piston 14 inside the actuator 10. The magnetic fluid 66 is movable inside the sealing member 64. In a state where the position detection sensor 30 is attached to the upper surface 22 of the actuator 10, the magnetic fluid 66 moves in the moving direction of the magnet 20 (the piston 14) following the magnet 20. In the sealing member 64, the magnetic fluid 66 is concentrated in a region close to the magnet 20. The position where the magnetic fluid 66 is concentrated indicates the position of the magnet 20 in the moving direction of the piston 14.

As described above, the position detection sensor 30 according to the first embodiment includes, on the outer surface of the housing 50, the mark (for example, the light exit window 62) indicating the position of the magnetic sensor 52 in the moving direction of the piston 14. Further, the position detection sensor 30 includes the magnet detection member 56 for enabling the position of the piston 14 (the magnet 20) in the moving direction of the piston 14 to be visually recognized.

The user adjusts the position of the position detection sensor 30 so that the mark (for example, the light exit window 62) and the concentration position of the magnetic fluid 66 coincide with each other in a state where the piston 14 is positioned at the first end portion 18. Consequently, an optimum position for attaching the position detection sensor 30 to the actuator 10 can be specified. Therefore, the position detection sensor 30 can be attached to the actuator 10 at an optimum position.

### [Second Embodiment]

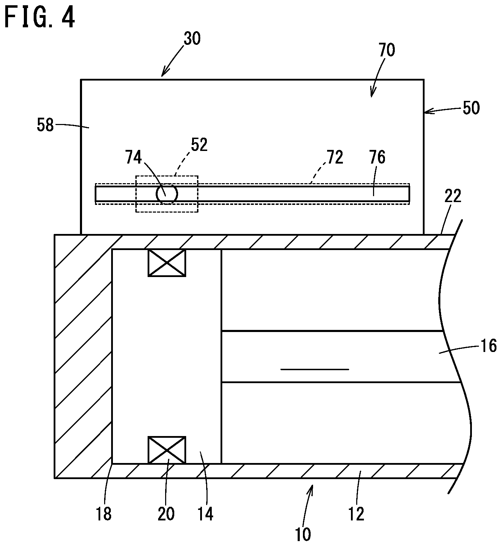

FIG. 4 is a schematic view of the actuator 10 and the position detection sensor 30 according to a second embodiment. The position detection sensor 30 includes, in a side wall portion 70, a groove 72 (an accommodating portion) and a spherical body 74 (a magnetic body). The configuration of the second embodiment will be described with respect to the portions different from the configuration of the first embodiment.

The groove 72 is formed so as to be recessed from the side surface 58 of the side wall portion 70. The groove 72 includes an opening 76 at a portion flush with the side surface 58. The groove 72 and the opening 76 are formed along the longitudinal direction of the side surface 58 of the housing 50. In a state where the position detection sensor 30 is attached to the upper surface 22 of the actuator 10, the extending direction of the groove 72 and the opening 76 is parallel to the moving direction of the piston 14 of the actuator 10. The groove 72 accommodates the spherical body 74. The dimension of the opening 76 is smaller than the diameter of the spherical body 74 in the lateral (short side) direction of the side surface 58. Therefore, the spherical body 74 accommodated in the groove 72 does not fall off from the opening 76. Part of the spherical body 74 accommodated in the groove 72 is exposed through the opening 76. By providing the opening 76, the spherical body 74 in the groove 72 can be visually recognized from the outside of the position detection sensor 30.

It should be noted that the groove 72 may not be formed in the side wall portion 70. A member in which the groove 72 is formed may be attached to the side wall portion 70 of the position detection sensor 30 via a hook and loop fastener or the like. Further, the spherical body 74 may be detachable from the housing 50. For example, an attachable and detachable lid member may be provided at the end portion of the groove 72, and the spherical body 74 may be inserted into and removed from the groove 72 in a state where the lid member is removed.

The spherical body 74 is a magnetic body such as a steel ball, and therefore is attracted to the magnet 20 mounted on the piston 14 inside the actuator 10. The spherical body 74 is movable along the groove 72. In a state where the position detection sensor 30 is attached to the upper surface 22 of the actuator 10, the spherical body 74 moves in the moving direction of the magnet 20 (the piston 14) following the magnet 20. The spherical body 74 is positioned in a region close to the magnet 20. The position of the spherical body 74 indicates the position of the magnet 20 in the moving direction of the piston 14.

As in the first embodiment, the position detection sensor 30 according to the second embodiment includes, on the outer surface of the housing 50, a mark (for example, the light exit window 62) indicating the position of the magnetic sensor 52 in the moving direction of the piston 14. Further, the position detection sensor 30 includes the groove 72 and the spherical body 74 for enabling the position of the piston 14 (the magnet 20) in the moving direction of the piston 14 to be visually recognized.

The user adjusts the position of the position detection sensor 30 so that the mark (for example, the light exit window 62) and the stop position of the spherical body 74 coincide with each other in a state where the piston 14 is stopped at the first end portion 18. Consequently, an optimum position for attaching the position detection sensor 30 to the actuator 10 can be specified. Therefore, the position detection sensor 30 can be attached to the actuator 10 at an optimum position.

### [Others]

The position detection sensor 30 according to each embodiment may receive electric power that is supplied by wire, instead of receiving electric power that is supplied wirelessly. Further, the position detection sensor 30 may include a battery instead of receiving electric power that is supplied wirelessly.

### [Supplementary Note]

The following supplementary notes are further disclosed in relation to the above-described embodiments.

### Supplementary Note 1

The position detection sensor (30) of the present disclosure is a position detection sensor attached to the actuator (10), and includes the sensor element (52) that detects the magnet (20) mounted on the piston (14) inside the actuator, the housing (50) that accommodates the sensor element, the magnetic body (66, 74) that is displaced to a position corresponding to the position of the magnet, and the accommodating portion (64, 72) that is provided in the housing and accommodates the magnetic body in a visually recognizable manner.

According to the above configuration, the optimum position for attaching the position detection sensor to the actuator can be specified regardless of whether the electric power is supplied by wire or wirelessly. Therefore, the position detection sensor can be attached to the actuator at an optimum position.

### Supplementary Note 2

The position detection sensor according to Supplementary Note 1 may further include the mark indicating a position corresponding to the position of the magnet at which the output of the sensor element is maximized.

### Supplementary Note 3

The position detection sensor according to Supplementary Note 1 or 2 may further include the light emitting element (54) that emits light to indicate that the magnet has been detected, and a position corresponding to the position of the magnet at which the output of the sensor element is maximized may coincide with the position of the light emitting element.

According to the above configuration, it is not necessary to provide a mark on the housing only for indicating the position of the sensor. Therefore, the appearance of the position detection sensor is simplified.

### Supplementary Note 4

In the position detection sensor according to any one of Supplementary Notes 1 to 3, the magnetic body may be the magnetic fluid (66).

### Supplementary Note 5

In the position detection sensor according to any one of Supplementary Notes 1 to 3, the magnetic body may be the spherical body (74).

### Supplementary Note 6

In the position detection sensor according to any one of Supplementary Notes 1 to 5, the magnetic body and the accommodating portion may be attachable to and detachable from the housing.

### Supplementary Note 7

In the position detection sensor according to any one of Supplementary Notes 1 to 3, the magnetic body may be attachable to and detachable from the accommodating portion.

According to the above configuration, the magnetic body and the accommodating portion can be removed from the housing after the adjustment of the position of the position detection sensor is ended. Therefore, the appearance of the position detection sensor is simplified.

## Claims

1. A position detection sensor (30) attached to an actuator (10), the position detection sensor (30) comprising:
a sensor element (52) that detects a magnet (20) mounted on a piston (14) inside the actuator (10);
a housing (50) that accommodates the sensor element (52);
a magnetic body (66, 74) that is displaced to a position corresponding to a position of the magnet (20); and
an accommodating portion (64, 72) that is provided in the housing (50) and accommodates the magnetic body (66, 74) in a visually recognizable manner.

2. The position detection sensor (30) according to claim 1, further comprising a mark indicating a position corresponding to a position of the magnet (20) at which an output of the sensor element (52) is maximized.

3. The position detection sensor (30) according to claim 1, further comprising a light emitting element (54) that emits light to indicate that the magnet (20) has been detected, wherein
a position corresponding to a position of the magnet (20) at which an output of the sensor element (52) is maximized coincides with a position of the light emitting element (54).

4. The position detection sensor (30) according to any one of claims 1 to 3, wherein
the magnetic body is a magnetic fluid (66).

5. The position detection sensor (30) according to any one of claims 1 to 3, wherein
the magnetic body is a spherical body (74).

6. The position detection sensor (30) according to any one of claims 1 to 3, wherein
the magnetic body (66, 74) and the accommodating portion (64, 72) are attachable to and detachable from the housing (50).

7. The position detection sensor (30) according to any one of claims 1 to 3, wherein
the magnetic body (66, 74) is attachable to and detachable from the accommodating portion (64, 72).
